# EUROPEAN PATENT APPLICATION

(11) **EP 1 085 436 A2**
(43) Date of publication of application: **21.03.2001**
(21) Application number: 00120124.3
(22) Date of filing: 19.09.2000
(51) Int. Cl.: G06F 17/60

(54) **E-mail system**

(30) Priority: 20.09.1999 JP 26592199
(71) Applicant: NEC CORPORATION, Tokyo (JP)
(72) Inventor: Nitta, Yoshio, Minato-ku, Tokyo (JP)
(74) Representative: VOSSIUS & PARTNER

(57) **Abstract**

In an e-mail system with a server to conduct a processing to an e-mail addressed to a client, the server has a spooling means for spooling the e-mail, a storing means for storing transmission conditions in transmitting the e-mail spooled into the spooling means, and a processing means for transmitting the e-mail when the e-mail spooled into the spooling means satisfies the transmission conditions, the transmission conditions being set previously by the client.

## Description

This invention relates to an e-mail system that is provided with a server to conduct the processing of e-mails addressed to its client.

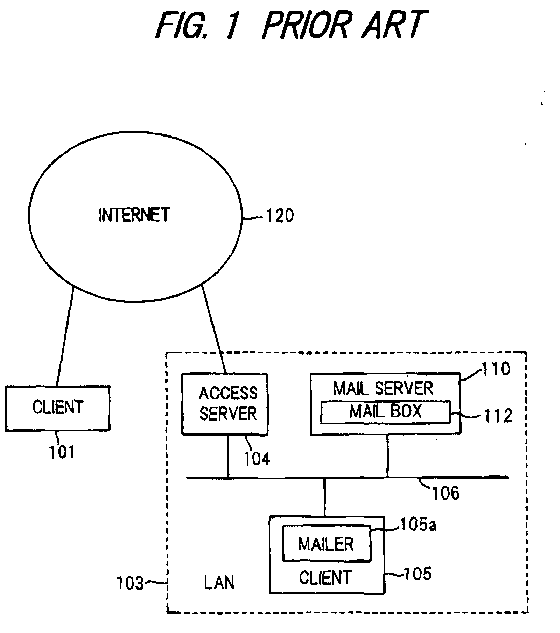

FIG. 1 is a block diagram showing the composition of a conventional e-mail system. In FIG.1. it is assumed that a client 101 is connected through the Internet 102 to a LAN (local area network) 103. Also, it is assumed that the LAN 103 is composed of an access server 104, a mail server 110, a client 105 and a communication cable 106 for connecting these each other.

When the client 101 sends an e-mail to the client 105 belonging to the LAN 103, this e-mail is delivered to the LAN 103 through the Internet 102. Then, through the access server 104 of the LAN 103, it is spooled (stored) into a mailbox 112 of the mail server 110.

When the client 105 accesses the mail server 110 by using a mailer 105a, if its e-mail reception protocol is POP3 (post office protocol version 3), all e-mails, which are spooled in the mailbox 112, addressed to the client 105 are downloaded in the lump.

The mailer 105a has a filtering function that some receive e-mail is automatically discarded (subject to the filtering processing) depending on from whom that e-mail is sent. By using this function, the user of the client 105 can save time for unnecessary e-mail since it is not necessary for the user to read a low-priority e-mail, such as a direct mail, received.

However, even when the client 105 has such a filtering function, all e-mails, which are spooled in the mailbox 112, addressed to the client 105 are downloaded in the lump. Therefore, the client 105 has to, in advance, spool all the e-mails into its storage before filtering the e-mails downloaded. This means that even e-mails unnecessary for the user of the client 105 need to be spooled. Thus, in the conventional e-mail system, it is required that the client 105 is provided with an additional capacity of memory for spooling the unnecessary e-mails. Namely, there is a problem that the load of the client 105 becomes bigger.

Also, since the filtering function mentioned above is achieved by software, the computer (client 105) is subject to a big load in executing the filtering function. Therefore, also from this point of view, the lead of the client 105, which is provided with the filtering function, becomes bigger.

Accordingly, it is an object of the invention to provide an e-mail system that is able to reduce the load of client.

According to the invention, an e-mail system, comprises:
a server that conducts a processing to an e-mail addressed to a client;
   wherein the server is composed of a spooling means for spooling the e-mail, a storing means for storing transmission conditions in transmitting the e-mail spooled into the spooling means, and a processing means for transmitting the e-mail when the e-mail spooled into the spooling means satisfies the transmission conditions, the transmission conditions being set previously by the client.

Employing this composition, the server can have the filtering function. Thus, e-mails that do not satisfy the transmission conditions are not transmitted from the spooling means and are not transmitted to the client. So, since the additional capacity of memory that is conventionally provided to spool unnecessary e-mails is not needed, the load of the client can be reduced that much.

The invention will be explained in more detail in conjunction with the appended drawings, wherein:
FIG.1 is a block diagram showing the composition of the conventional e-mail system;
FIG.2 is a block diagram showing the composition of an e-mail system in a first preferred embodiment according to the invention;
FIG.3 is a block diagram showing the composition of a mail server 10 in FIG.2;
FIG.4 is a flow chart showing an example of the processing of a filtering section 13 in FIG.2;
FIG.5 is a block diagram showing the composition of an e-mail system in a second preferred embodiment according to the invention;
FIG.6 is a flow chart showing an example of a processing to be conducted by a broker section 14 in FIG.5;
FIG.7 is a flow chart showing another example of a processing to be conducted by the broker section 14 in FIG.5;
FIG.8 is a block diagram showing the composition of a mail server in a third preferred embodiment according to the invention;
FIG.9 is a flow chart showing a reply processing conducted by the broker section 14 in a fourth preferred embodiment according to the invention;
FIG.10 is a block diagram showing an e-mail system in a fifth preferred embodiment according to the invention;
FIG.11 is a flow chart showing an example of the processing of a filtering section 13a in FIG.10;
FIG.12 is a block diagram showing an e-mail system in a sixth preferred embodiment according to the invention;
FIG.13 is a flow chart showing an example of a processing to be conducted by a broker section 14a in FIG.12;
FIG.14 is a block diagram showing the composition of a modification of the e-mail system in the sixth preferred embodiment; and
FIG.15 is a block diagram showing the composition of the e-mail system of the invention in a case that a mobile telephone is serviced.

An e-mail system in the preferred embodiments according to the invention will be explained below, referring to the drawings.

### [First Embodiment]

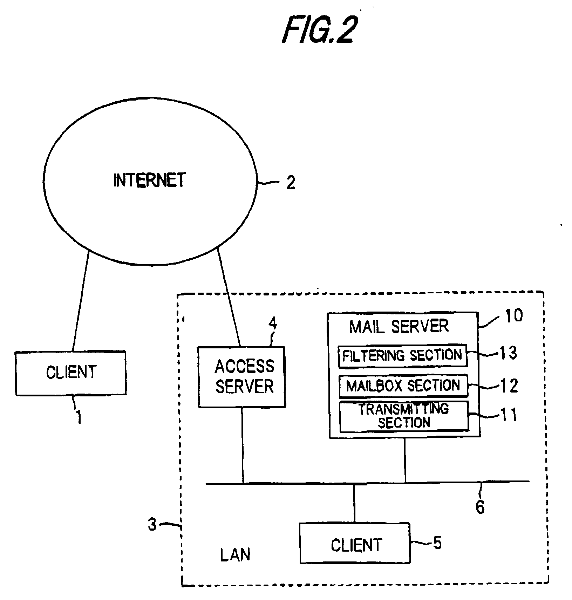

FIG.2 is a block diagram showing an e-mail system in the first preferred embodiment according to the invention.

In FIG.2, it is assumed that a client 1 is connected through the Internet 2 to a LAN 3. Also, it is assumed that the LAN 3 is composed of an access server 4, a mail server 10, a client 5 and a communication cable 6 for connecting these each other.

The access server 4 has a function that makes the LAN 3 connect with the Internet 2.

The mail server 10 is composed of a transmitting section 11 that transmits an e-mail according to a request from the client 5, a mailbox section 12 that serves as a spooling means for spooling (storing) an e-mail delivered to the client 5, and a filtering section (processing means) 13 that processes e-mails spooled into the mailbox section 12 according to processing conditions predetermined by the client 5.

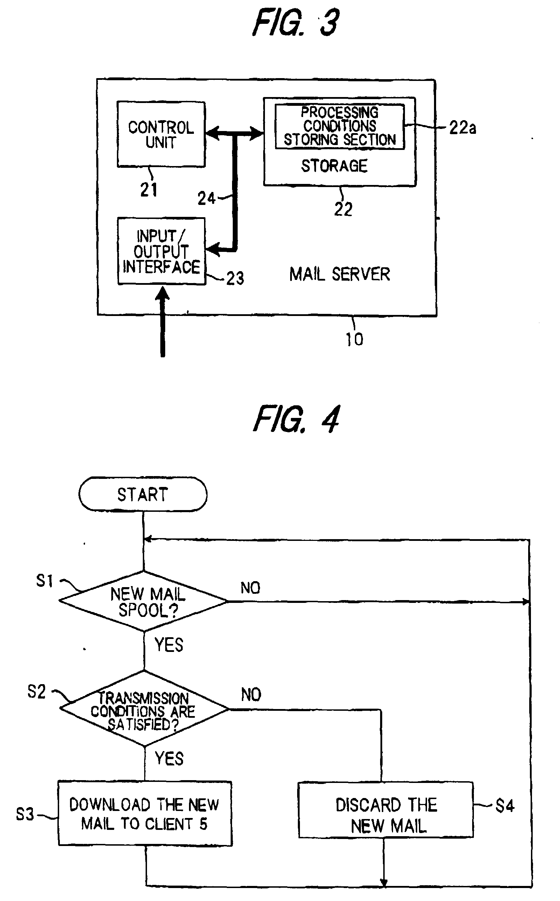

FIG.3 is a block diagram showing the composition of the mail server 10 in FIG.2. The mail server 10 is composed of a control unit 21, a storage 22, an input-output interface 23, and a bus 24 for connecting these each other.

The storage 22 is provided with an area for storing a control program, and an area for spooling e-mails. The control unit 21 operates based on the control program stored in the storage 22, thereby various functions, described later, are achieved.

The storage 22 is further provided with a processing conditions storing section (storing means) 22a that stores the processing conditions for e-mail. Herein, the processing conditions mean criteria used, by the filtering section 13, in processing automatically an e-mail delivered to the client 5.

The criteria include transmitting conditions in determining whether to download (transmit) an e-mail to the client 5, and discard conditions in, in contrast, determining whether to discard an e-mail without downloading the e-mail to the client 5.

For example, title, keyword, sender's address, size, first part of text etc. of e-mail can be used as the processing conditions. In case of using the sender's address as the processing conditions, the setting can be made, for example, so that e-mail from the client 1 is downloaded always and other e-mails are discarded without downloading them. The processing conditions may be a combination of multiple conditions. The processing conditions are, in advance, set by the client 5.

Processing conducted by the filtering section 13 when the client 1 sends an e-mail to the client 5 is explained below.

FIG.4 is a flow chart showing an example of the processing of the filtering section 13. Here, it is assumed that transmission conditions in downloading e-mail to the client 5 are set as the processing conditions for e-mail.

The filtering section 13 always monitors the mailbox section 12 (step S1:NO). When the mail server 10 receives a new e-mail addressed to the client 5, this email is spooled into the mailbox section 12.

When the filtering section 13 detects that the new e-mail is spooled into the mailbox section 12 (step S1:YES), it judges whether the e-mail satisfies the transmission conditions or not (step S2).

If the e-mail spooled into the mailbox section 12 satisfies the transmission conditions (step S2:YES), then the filtering section 13 conducts the processing to download, without any delay, the e-mail to the client 5 (step S3). After that, the filtering section 13 restarts to monitor the mailbox section 12 (step S1:NO).

In any case, with the aid of the server that has such e-mail filtering function, the client 5 does not need to download unnecessary e-mails. Therefore, since the additional capacity of memory that is conventionally provided to spool unnecessary e-mails is not needed, the load of the client 5 can be reduced that much. Further, the load of the client 5 to achieve the filtering function can be also removed.

### [Second Embodiment]

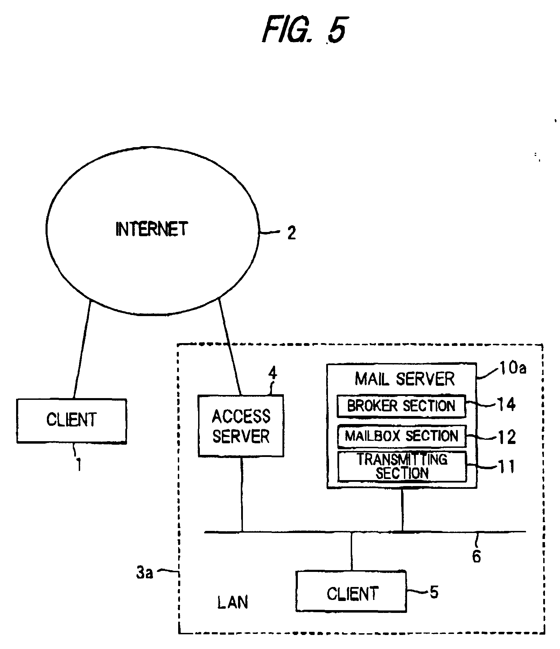

FIG.5 is a block diagram showing an e-mail system in the second preferred embodiment according to the invention. A mail server 10a in FIG.5 is provided with a broker section (processing means) 14 instead of the filtering section 13 in FIG.2. The broker section 14 has a function that acts as an intermediary between the clients 1 and 5, as well as the filtering function of the filtering section 13.

The broker section 14 may conduct the intermediary processing to one client 5. Also, when multiple clients 5 belong to a LAN 3a, the broker section 14 may conduct the intermediary processing to the multiple clients 5 by the time sharing.

Processing conducted by the broker section 14 when the client 1 sends an e-mail to the client 5 is explained below.

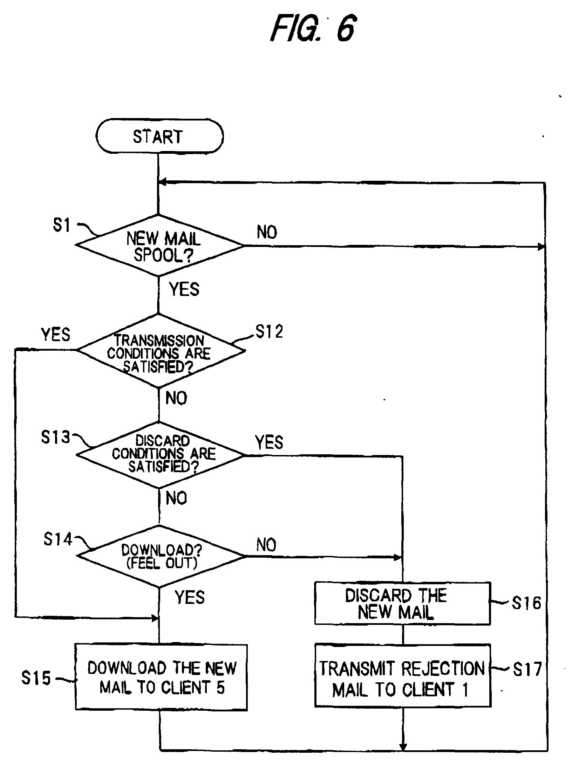

FIG.6 is a flow chart showing an example of the processing to be conducted by the broker section 14. Here, it is assumed that transmission conditions in downloading e-mail to the client 5 and discard conditions in discarding e-mail without downloading it are set as the processing conditions for e-mail.

The broker section 14 always monitors the mailbox section 12 (step S11:NO). When the mail server 10a receives a new e-mail addressed to the client 5, this email is spooled into the mailbox section 12.

When the broker section 14 detects that the new e-mail is spooled into the mailbox section 12 (step S11:YES), it judges whether the e-mail satisfies the transmission conditions or not (step S12).

If the e-mail spooled into the mailbox section 12 satisfies the transmission conditions (step S12:YES), then the broker section 14 conducts the processing to download, without any delay, the e-mail to the client 5 (step S15).

On the other hand, if the e-mail spooled into the mailbox section 12 does not satisfy the transmission conditions (step S12:NO), then the broker section 14 judges whether the e-mail satisfies the discard conditions or not (step S13).

If the e-mail spooled into the mailbox section 12 satisfies the discard conditions (step S13:YES), then the broker section 14 conducts the processing to discard the e-mail without downloading it to the client 5 (step S16).

In this case, the broker section 14 sends a rejection mail to the client 1 that is the sender of the e-mail discarded, thereby notifying the client 1 that the e-mail is discarded without downloading it to the client 5 (step S17). Thus, by the rejection mail sent from the broker section 14, the user of the client 1 can know that the user of the client 5 will not read the e-mail.

If the e-mail spooled into the mailbox section 12 does not satisfy the discard conditions, i.e., if it satisfy neither the transmission conditions nor the discard conditions (step S13:NO), then the broker section 14 requests the client 5 to issue its instructions. Namely, the broker section 14 feels out whether to download the e-mail to the client 5 or not, and waits for the instructions from the client 5 (step S14).

If the client 5 instructs the broker section 14 to download the e-mail in reply to the request from the broker section 14 (step S14:YES), the broker section 14 goes to step S15 based on this instruction, downloading the e-mail to the client 5.

On the contrary, if the client 5 instructs the broker section 14 to discard the e-mail (step S14:NO), the broker section 14 goes to step S16 based on this instruction, discarding the e-mail.

After downloading the new e-mail (step S15) or after transmitting the rejection mail (step S17), it goes to step S11 and the broker section 14 restarts to monitor the mailbox section 12.

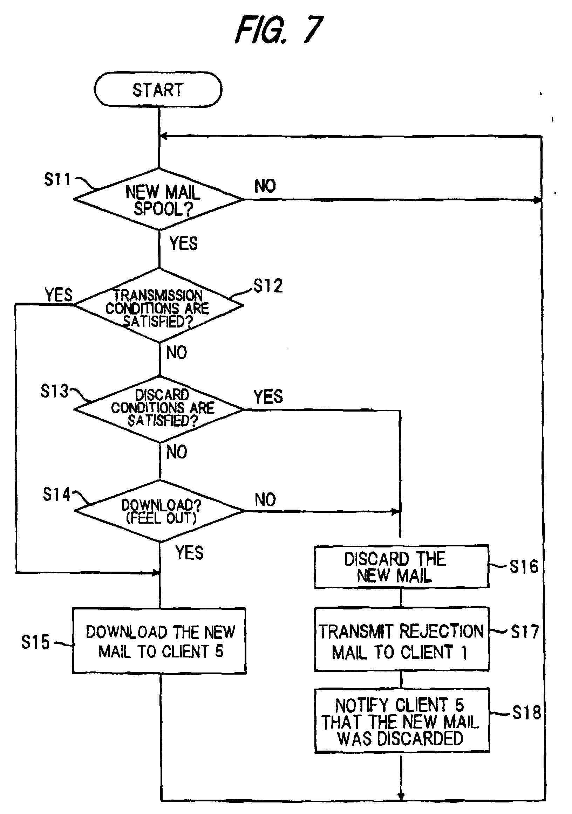

FIG.7 is a flow chart showing another example of the processing to be conducted by the broker section 14.

As shown in FIG.7, after transmitting the rejection mail to the client 1 at step S17, the client 5 may be notified that the e-mail was discarded without downloading it to the client 5 (step S18). Alternatively, without sending the rejection mail to the client 1, only the client 5 may be notified that.

This notification can include, for example, title, sender's address, size, and first part of text of e-mail discarded. By this information, the user of the client 5 can check e-mails that are discarded automatically without being downloaded.

Steps S14, S17 and S18 in FIGS.6 and 7 are the intermediary function of the broker section 14. With the intermediary function, the services to meet the needs of the client 5 can be offered.

In the examples shown in FIGS. 6 and 7, as the processing conditions for e-mail, the transmission conditions and discard conditions are employed. However, when only one of the transmission conditions and discard conditions is set, the broker section 14 will request the client 5 to issue its instructions when it judges that the e-mail does not satisfy the processing conditions thus set.

### [Third Embodiment]

The broker section 14 in FIG.5 can be provided with a function that displays a discard list for listing e-mails discarded without being downloaded.

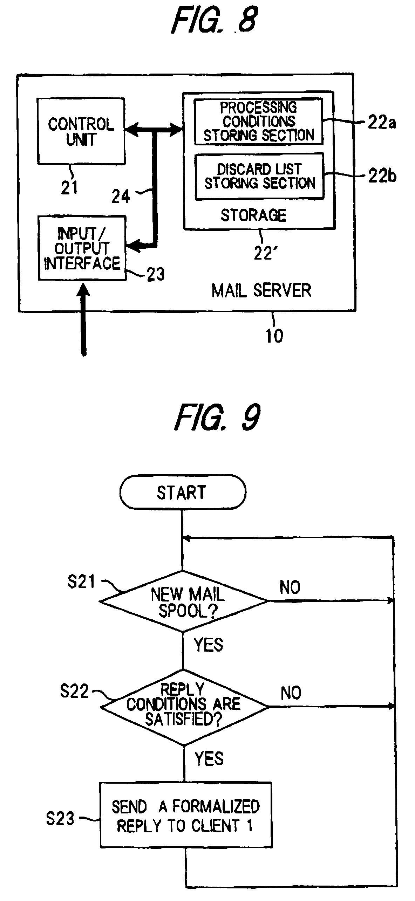

FIG.8 is a block diagram showing another composition of the mail server. In FIG.8, like parts are indicated by like reference numerals as used in FIG.3 and the explanations are omitted here.

A mail server 10b in FIG.8 is provided with a storage 22' including a discard-list storing section 22b. The discard-list storing section 22b is provided to store the discard list of e-mails discarded in the case that the e-mails spooled into the mailbox section 12 are discarded without being downloaded to the client 5. The discard list includes the description about, for example, title, sender's address, size, and first part of text of e-mail discarded.

The broker section 14 displays the discard list onto the client 5, according to the request from the client 5. Also by this information, the user of the client 5 can check e-mails that are discarded automatically without being downloaded.

### [Fourth Embodiment]

The processing conditions storing section 22a in FIG.8 can store not only the transmission conditions and discard conditions to e-mail but also reply conditions in sending a formalized reply mail to the sender of e-mail. For example, the user of the client 5 can set a formalized reply mail, such as "away from home until [a specific date]", to be sent to all e-mails received by the mail server 10b during the absence.

Reply processing conducted by the broker section 14 when the client 1 sends an e-mail to the client 5 is explained below.

FIG.9 is a flow chart showing the reply processing conducted by the broker section 14. The broker section 14 always monitors the mailbox section 12 (step S21:NO). When mail server 10b receives a new e-mail addressed to the client 5, this e-mail is spooled into the mailbox section 12.

When the broker section 14 detects that the new e-mail is spooled into the mailbox section 12 (step S21:YES), it judges whether the e-mail satisfies the transmission conditions or not (step S22).

If the e-mail spooled into the mailbox section 12 satisfies the transmission conditions (step S22:YES), then the broker section 14 conducts the processing to send, without any delay, the formalized mail to the client 1 (step S23). Then, the broker section 14 restarts to monitor the mailbox section 12 (step S21:NO).

On the other hand, if the e-mail spooled into the mailbox section 12 does not satisfy the transmission conditions (step S22:NO), then the broker section 14 restarts to monitor the mailbox section 12 without sending the formalized mail (step S21:NO).

Thus, with the aid of the broker section 14 that has the automatic reply function, the load of the client 5 can be reduced.

### [Fifth Embodiment]

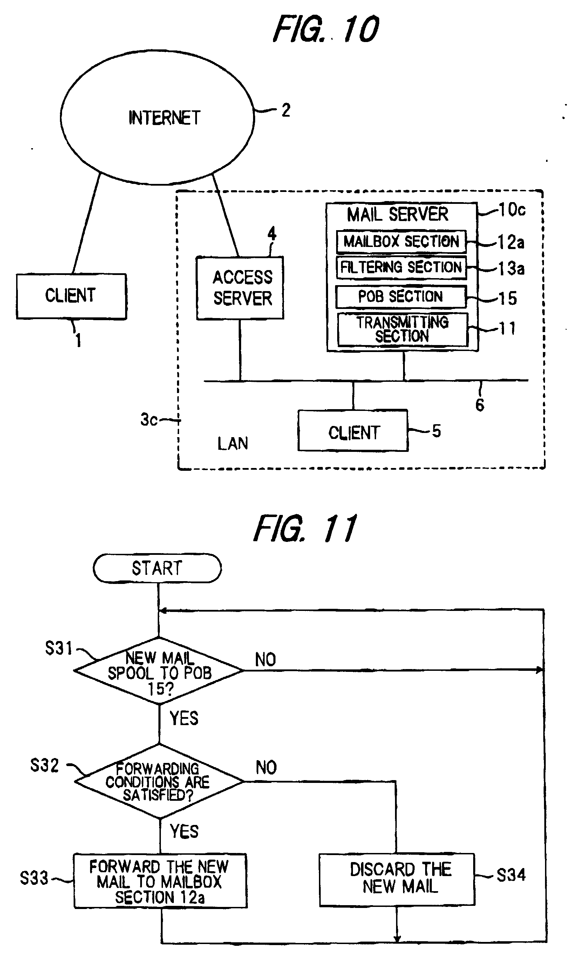

FIG. 10 is a block diagram showing an e-mail system in the fifth preferred embodiment according to the invention. In FIG.10, like parts are indicated like reference numerals used in FIG.2, and the explanations are omitted here.

A mail server 10c in FIG.10 is, in addition to the transmitting section 11, provided with a post office box (POB) section 15, a filtering section 13a and a mailbox section 12a.

In receiving e-mails, the POB section 15 is, from functional point of view, to be located at the previous stage to the mailbox section 12a. Namely, an e-mail, which is addressed to the client 5, received by the mail server 10c is first spooled into the POB section 15. Thus, in the e-mail system in FIG.10, the POB section 15 functions as a spooling means for spooling the received e-mail addressed to the client 5.

The filtering section 13a is composed as such a processing means that conducts the filtering processing of emails spooled into the POB section 15 based on transfer conditions that are previously set by the client 5, thereby transferring only e-mail to satisfy the transfer conditions to the mailbox section 12a. Herein, the transfer conditions mean criteria used in transferring the e-mails spooled into the POB section 15 to the mailbox section 12a.

The mailbox section 12a is composed as means for spooling the e-mail transferred from the POB section 15.

In FIG.10, the mail server 10c belongs to a LAN 3c.

Processing conducted by the filtering section 13a when the client 1 sends an e-mail to the client 5 is explained below.

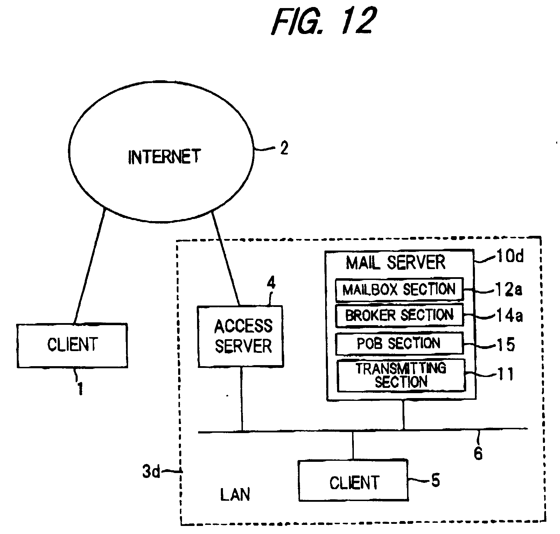

FIG.11 is a flow chart showing an example of the processing of the filtering section 13a.

The filtering section 13a always monitors the POB section 15 (step S31:NO). When the mail server 10c receives a new e-mail addressed to the client 5, this email is spooled into the POB section 15.

When the filtering section 13a detects that the new e-mail is spooled into the POB section 15 (step S31:YES), it judges whether the e-mail satisfies the transfer conditions or not (step S32).

If the e-mail spooled into the POB section 15 satisfies the transfer conditions (step S32:YES), then the filtering section 13a conducts the processing to transfer, without any delay, the e-mail to the mailbox section 12a (step S33). The e-mail transferred to the mailbox section 12a is spooled into the mailbox section 12a. After that, the filtering section 13a restarts to monitor the POB section 15 (step S31:NO).

On the other hand, if the e-mail spooled into the POB section 15 does not satisfy the transfer conditions (step S32:NO), then the filtering section 13a conducts the processing to discard the e-mail without downloading it to the client 5 (step S34). After that, the filtering section 13a restarts to monitor the POB section 15 (step S31:NO).

The e-mail spooled into the mailbox section 12a is not downloaded to the client 5 until the client 5 accesses the mailbox section 12a.

Not only e-mails useful to the client 5 but also unnecessary e-mails such as direct mail are delivered to the client 5. Also, an e-mail of very large size may be delivered. When such e-mails are spooled into the mailbox section 12a and are left without being downloaded to the client 5, the capacity of the mailbox section 12a assigned to the client 5 decreases and therefore e-mails newly delivered to the client 5 may not be spooled into the mailbox section 12a.

However, in this embodiment, as shown in FIG.10, with the POB section 15 and the filtering section 13a provided at the previous stage to the mail box section 12a, the filtering processing is conducted before the e-mails are spooled into the mailbox section 12a. Therefore, unnecessary e-mails are not spooled into the mailbox section 12a. So, only necessary e-mails are spooled into the mailbox section 12a. Thus, the capacity of the mailbox section 12a assigned to the client 5 can be used efficiently.

Furthermore, since the mail server 10c in FIG.10 is equipped with the filtering section 13a that conducts the filtering processing, an effect to reduce the load of the client 5 can be also obtained like the case of the mail server 10 in FIG.2.

To the POB section 15 in FIG.10, an ID (hereinafter referred to as POB ID) different from the user ID of the client 5 may be assigned. In this case, the client 5 can have a second e-mail address based on the POB ID in addition to the main e-mail address based on the user ID.

By making only the second e-mail address of the two e-mail addresses public, the main e-mail address can be kept in secrecy.

### [Sixth Embodiment]

FIG.12 is a block diagram showing an e-mail system in the sixth preferred embodiment according to the invention. In FIG.12, like parts are indicated like reference numerals used in FIG.10, and the explanations are omitted here.

A mail server 10d in FIG.12 is provided with a broker section (processing means) 14a instead of the filtering section 13a in FIG.10. The broker section 14a has, like the broker section 14 in FIG.5, a function that acts as an intermediary between the clients 1 and 5, as well as the filtering function of the filtering section 13a.

In FIG.12, a mail server 10d belongs to a LAN 3d.

Processing conducted by the broker section 14a when the client 1 sends an e-mail to the client 5 is explained below.

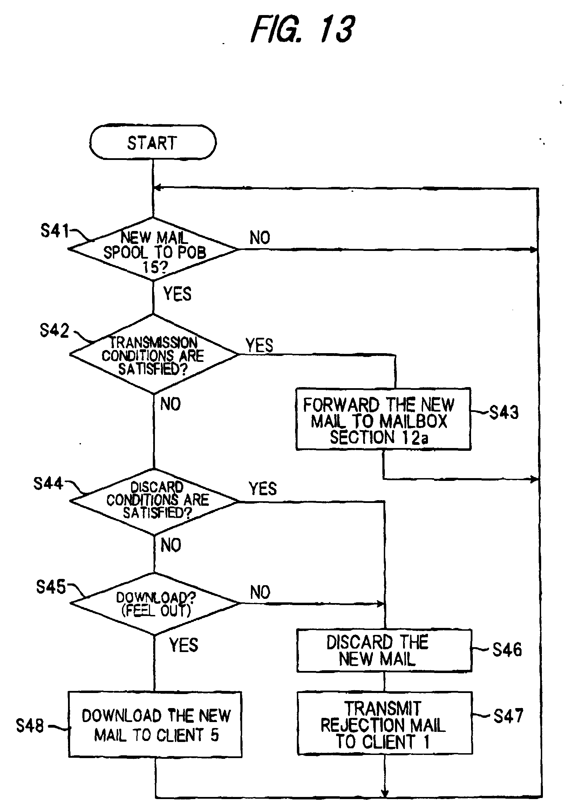

FIG.13 is a flow chart showing an example of the processing to be conducted by the broker section 14a. Here, it is assumed that transfer conditions in transferring e-mail to the mailbox section 12a and discard conditions in discarding e-mail without transferring it are set as the processing conditions for e-mail.

The broker section 14a always monitors the POB section 15 (step S41:NO). When the mail server 10d receives a new e-mail addressed to the client 5, this email is first spooled into the POB section 15.

When the broker section 14a detects that the new e-mail is spooled into the POB section 15 (step S41:YES), it judges whether the e-mail satisfies the transfer conditions or not (step S42).

If the e-mail spooled into the POB section 15 satisfies the transfer conditions (step S42:YES), then the broker section 14a conducts the processing to transfer, without any delay, the e-mail to the mailbox section 12a (step S43).

On the other hand, if the e-mail spooled into the POB section 15 does not satisfy the transfer conditions (step S42:NO), then the broker section 14a judges whether the e-mail satisfies the discard conditions or not (step S44).

If the e-mail spooled into the POB section 15 satisfies the discard conditions (step S44:YES), then the broker section 14a conducts the processing to discard the e-mail without transferring it to the mailbox section 12a (step S46).

In this case, the broker section 14a sends the rejection mail to the client 1 that is the sender of the e-mail discarded, thereby notifying the client 1 that the e-mail is discarded without downloading it to the client 5 (step S47).

If the e-mail spooled into the POB section 15 does not satisfy the discard conditions, i.e., if it satisfy neither the transfer conditions nor the discard conditions (step S44:NO), then the broker section 14a requests the client 5 to issue its instructions. Namely, the broker section 14a feels out whether to download the e-mail to the client 5 or not, and waits for the instructions from the client 5 (step S45).

If the client 5 instructs the broker section 14a to download the e-mail in reply to the request from the broker section 14a (step S45:YES), the broker section 14a downloads the e-mail to the client 5 based on this instruction (step S48).

On the contrary, if the client 5 instructs the broker section 14a to discard the e-mail (step S45:NO), the broker section 14a goes to step S46 based on this instruction, discarding the e-mail.

After transferring or downloading the new e-mail at step S43 or S48 or after transmitting the rejection mail at step S47, it goes to step S41 and the broker section 14a restarts to monitor the POB section 15.

Steps S45 and S47 described above are the intermediary function of the broker section 14a. With the intermediary function, the services to meet the needs of the client 5 can be offered.

Also in FIG.13, like step S18 in FIG.7, after step S47, the broker section 14a may notify the client 5 or the mailbox section 12a that the e-mail is discarded without being transferred to the mailbox section 12a.

Also, like the mail server 10b in FIG.8. the mail server 10d in FIG.12 may make the discard list and the broker section 14a may make the client 5 display the discard list in reply to the request from the client 5.

Also, the broker section 14a may be provided with the automatic rely function.

In the examples explained in the above embodiments, the filtering function, broker function and POB function are achieved by the mail server 10, 10a to 10d. However, the same functions can be achieved by, e.g., the access server.

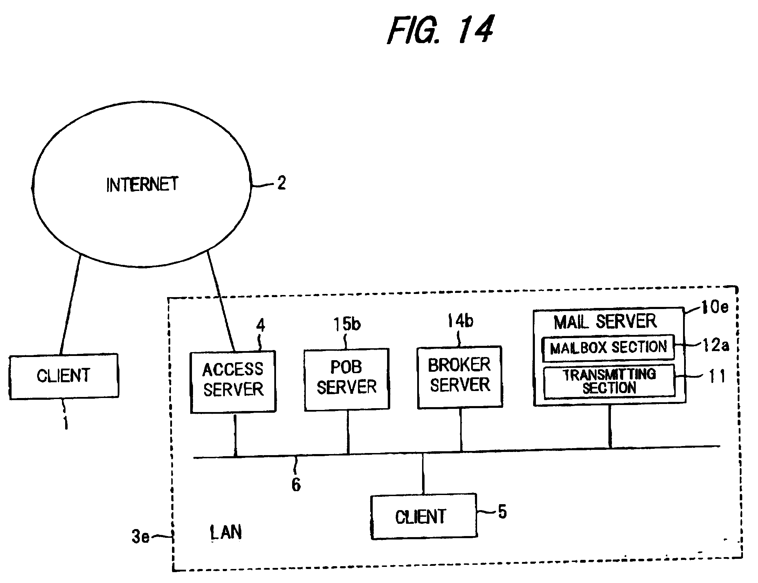

Alternatively, as shown in FIG.14, a broker server 14b and a POB server 15b may be provided so that each of the functions can be assigned to one independent server. In like manner, a filtering server (not shown) may be provided separately.

Meanwhile, in FIG.14, the access server 4, a mail server 10e, the broker server 14b, the POB server 15b, the client 5 and the communication cable 6 compose a LAN 3e.

Although in the above embodiments the client 5 belonging to the LAN 3, 3a and 3c to 3e is serviced, this invention is not limited to these examples. For example, this invention can apply to mobile telephones.

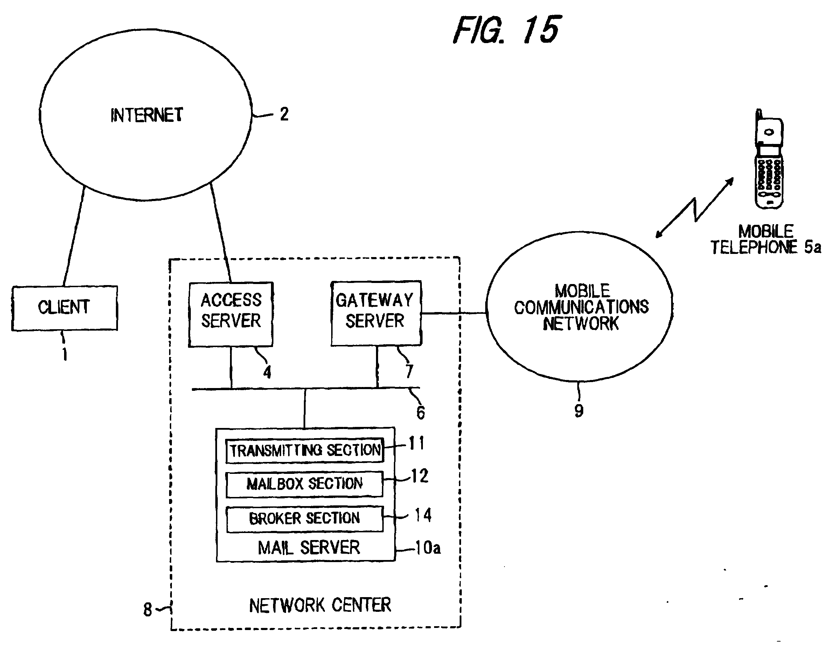

FIG.15 is a block diagram showing a composition of the e-mail system in a case that a mobile telephone 5a is serviced. As shown in FIG.15, a network center 8 of mobile communications carrier is at least provided with the access server 4, a gateway server 7 and the mail server 10a. The mail server 10a is similar to that in FIG.5, and is provided with the broker section 14 that achieves the filtering function and intermediary function. Optionally, instead of the mail server 10a, the mail server 10 with the filtering section 13 can be used and the mail servers 10c, 10d with the POB section 15 can be used.

The gateway server 7 serves to conduct the protocol conversion between the Internet 2 and a mobile communications network 9. The mobile communications network 9 means a mobile telephone network and a PHS network.

If the mobile telephone 5a, such as a mobile telephone and PHS telephone, was provided with the filtering function or intermediary function, the size of the mobile telephone 5a would increase. Since the mobile telephone 5a needs to be miniaturized and light-weighted for convenience of portability, it is not reasonable to provide the mobile telephone 5a with these functions.

Thus, as shown in FIG.15, the network center 8 is provided with the filtering function or intermediary function, thereby a high-quality service can be offered to the user of the mobile telephone 5a without increasing the size of the mobile telephone 5a.

### Advantages of the invention:

In the e-mail system of the invention, the server is provided with the processing means for transmitting an e-mail spooled into the spooling means when the e-mail satisfies the transmission conditions. Thus, the server can have the filtering function. So, since the additional capacity of memory that is conventionally provided to spool unnecessary e-mails is not needed, the load of the client can be reduced that much.

Also, the processing means can be provided with means for transmitting the e-mails spooled into the spooling means to the client. Thereby, e-mails to satisfy the transmission conditions can be directly transmitted to the client.

Further, the processing means can be provided with means for processing the e-mails based on the instructions of client in the case that the e-mail does not satisfy the transmission conditions. Thereby, even when the transmission conditions for e-mail cannot be set simply, the fine processing can be conducted along the desire of user.

Also, the processing means can be provided with means for discarding an e-mail without downloading it to the client in the case that the e-mail spooled into the spooling means satisfies the discard conditions. Thereby, unnecessary e-mails can be discarded automatically without downloading it to the client. Therefore, the load of the client can be reduced.

Further, the processing means can be provided with means for processing the e-mails based on the instructions of client in the case that the e-mail satisfies neither the transmission conditions nor the discard conditions. Thereby, even when the transmission conditions and discard conditions for e-mail cannot be set simply, the fine processing can be conducted along the desire of user.

Also, the processing means can be provided with means for notifying at least one of the sender of e-mail and the client that the e-mail is discarded without being transmitted to the client. Thereby, the user on the sender side can know that the user of client as the addressee will not read the e-mail. Also, the client as the addressee can check the e-mail that is discarded without being transmitted.

Alternatively, the processing means can be provided with means for making and displaying the list of e-mails that are discarded without being transmitted. Also by this, the client as the addressee can check the e-mail that is discarded without being transmitted.

Also, the processing means can be provided with the mailbox means in addition to the spooling means, thereby transmitting an e-mail from the spooling means to the mailbox means in the case that the e-mail satisfy the transmission conditions. In this case, the filtering is conducted before the e-mail is spooled into the mailbox means. So, since it is not necessary to spool unnecessary e-mails into the spooling means, the capacity of the mailbox means can be used efficiently. Even in this case, the server conducts the filtering processing, all the same. Therefore, the effect to reduce the load of client can be also obtained.

In this case, providing the processing means with means for processing the e-mails based on the instructions of client in the case that the e-mail does not satisfy the transmission conditions, even when the transmission conditions and discard conditions for e-mail cannot be set simply, the fine processing can be conducted along the desire of user.

Also, the processing means can be provided with means for discarding an e-mail without transmitting it to the mailbox means in the case that the e-mail spooled into the spooling means satisfies the discard conditions. Thereby, unnecessary e-mails can be discarded automatically without transmitting it to the mailbox means. Therefore, the capacity of the mailbox means can be used efficiently.

Further, the processing means can be provided with means for processing the e-mails based on the instructions of client in the case that the e-mail satisfies neither the transmission conditions nor the discard conditions. Thereby, even when the transmission conditions and discard conditions for e-mail cannot be set simply, the fine processing can be conducted along the desire of user.

Also, the processing means can be provided with means for notifying the sender of e-mail that the e-mail is discarded without being transmitted to the mailbox means. Thereby, the user on the sender side can know that the user of client as the addressee will not read the e-mail.

Also, in the same case, the processing means can be provided with means for notifying the client or mailbox as the addressee that information. Alternatively, the processing means can be provided with means for making and displaying the list of e-mails that are discarded without being transmitted to the mailbox. By this, the client can check the e-mail that is discarded without being transmitted.

Also, the processing means can be provided with means for sending a formalized reply mail to the sender of e-mail addressed to the client. Thereby, the formalized mail can be sent back without increasing the load of the client as the addressee.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. An e-mail system, comprising;
a server that conducts a processing to an e-mail addressed to a client;
wherein said server is composed of a spooling means for spooling the e-mail, a storing means for storing transmission conditions in transmitting the e-mail spooled into said spooling means, and a processing means for transmitting the e-mail when the e-mail spooled into said spooling means satisfies said transmission conditions, said transmission conditions being set previously by the client.

2. An e-mail system according to claim 1, wherein:
said processing means includes means for transmitting the e-mail to the client.

3. A system according to claim 1 or 2, wherein:
said processing means is composed of means for requesting the client to issue its instructions when the e-mail does not satisfy said transmission conditions, and means for processing the e-mail based on the instructions issued from the client in reply to the request.

4. A system according to claim 1, 2 or 3, wherein:
said storing means includes means for storing discard conditions in discarding the e-mail spooled into said spooling means without transmitting the e-mail to the client; and
said processing means includes means for discarding the e-mail spooled into said spooling means without transmitting the e-mail to the client when the e-mail satisfies said discard conditions.

5. A system according to any of claims 1 to 4, wherein:
said processing means includes means for, when the e-mail is discarded without being transmitted to the client, notifying at least one of the sender of the e-mail and the client that the e-mail is discarded without being transmitted to the client.

6. A system according to any of claims 1 to 5, wherein:
said processing means includes means for storing a list of e-mails that are discarded without being transmitted to the client and for displaying said list.

7. A system according to any of claims 1 to 6, wherein:
said server is further composed of a mailbox means for spooling the e-mail transmitted from said spooling means; and
said processing means is further composed of means for transmitting the e-mail to said mailbox means.

8. A system according to any of claims 1 to 7, wherein:
said processing means is further composed of means for requesting the client to issue its instructions when the e-mail does not satisfy said transmission conditions, and means for processing the e-mail based on the instructions issued from the client in reply to the request.

9. A system according to any of claims 1 to 8, wherein:
said storing means includes means for storing discard conditions in discarding the e-mail spooled into said spooling means without transmitting the e-mail to said mailbox section means; and
said processing means is further composed of means for discarding the e-mail spooled into said spooling means without transmitting the e-mail to said mailbox means when the e-mail satisfies said discard conditions.

10. A system according to any of claims 1 to 9, wherein:
said processing means is further composed of means for requesting the client to issue its instructions when the e-mail satisfies neither said transmission conditions nor said discard conditions, and means for processing the e-mail based on the instructions issued from the client in reply to the request,

11. A system according to claim 10, wherein:
said processing means includes means for, when the e-mail is discarded without being transmitted to said mailbox means, notifying the sender of the e-mail, that the e-mail is discarded without being transmitted to the client.

12. A system according to claim 10 or 11, wherein:
said processing means includes means for, when the e-mail is discarded without being transmitted to said mailbox means, notifying the client or said mailbox means that the e-mail is discarded without being transmitted to said mailbox means.

13. A system according to claim 10, 11 or 12, wherein:
said processing means includes means for storing a list of e-mails that are discarded without being transmitted to said mailbox and for displaying said list.

14. A system according to any of claims 1 to 13, wherein:
said transmission conditions is set to be at least one of title, keyword, sender's address, size and first part of text of the e-mail.

15. A system according to any of claims 4 to 14, wherein:
said discard conditions is set to be at least one of title, keyword, sender's address, size and first part of text of the e-mail.

16. A system according to any of claims 1 to 15, wherein:
said processing means includes means for sending a formalized reply mail to the sender of the e-mail delivered being addressed to the client.
